# EUROPEAN PATENT SPECIFICATION

(11) **EP 0 699 549 B1**
(45) Date of publication and mention of the grant of the patent: **24.05.2000**
(21) Application number: 94202457.1
(22) Date of filing: 28.08.1994
(51) Int. Cl.: B60J 7/12

(54) **Folding roof for motorvehicle**
Faltverdeck für Kraftfahrzeug
Toit pliant pour voiture conversible

(43) Date of publication of application: 06.03.1996
(73) Proprietor: Van Bon, Jeroen, 6511 NZ Nijmegen (NL)
(72) Inventor: Van Bon, Jeroen, NL-6511 NZ Nijmegen (NL)
(74) Representative: Jilderda, Anne Ayolt

(56) References cited:
- EP-A- 0 292 654
- EP-A- 0 400 376
- GB-A- 413 467

## Description

The invention relates to a vehicle with a folding roof comprising a flexible cloth which is supported by a frame of a number of hinging parts, whereby a basic part of the frame is pivotable connected to the vehicle and whereby a roof part of the frame is separated from the basic part by at least one intermediate part and is connected by at least a pulling arm with the basic part.

EP-A-0 521 307 shows a folding roof according to the preamble of claim 1. The roof of the car described in the prior art document contains a frame of four hinging parts which supports a flexible cloth of a multi-layered fabric material. In order to open the roof, the basic part of the frame, which is pivotably connected to the vehicle, is turned in a backward direction, with or without a servo-assistance. In order to have the roof fold up like a harmonica, one of the roof parts of the frame is connected via a pulling arm to the basic part. The pulling arm ensures that the roof part concerned is slightly lifted and pulled backwards under the influence of the hinging movement of the basic part.

For this directed upward movement of the roof part, the pulling arm must extend at an angle thereto. In closed position of the roof, a pulling arm aimed upwards would, however, disturb the line of the roof of the vehicle, which has a very negative aesthetic effect. In practise a choice is therefore generally made for a construction in which the pulling arm is virtually parallel to the roof when the roof is closed. When the roof is opened, the roof part of the frame concerned must then be lifted across a certain distance in order to bring it past the dead point of the pulling arm. The smaller this distance is, the more must the fixed point pulling arm on the roof part be located farther away from the hinging part between the roof part and the intermediate part of the frame.

On the one hand it is important for the said distance to be as small as possible, both from a point of view of user friendliness and for a sound operation. On the other hand, a fixed point of the pulling arm which is located farther away leads to a longer pulling arm, which places limits on the degree to which the roof is foldable. In general, but especially for smaller vehicles, it is important that the roof can be folded up as compactly as possible. The constructor of a folding roof is therefore constantly placed before a dilemma between user friendliness and soundness of the roof on the one hand and compactness on the other hand.

The object of this invention, inter alia, is to solve this dilemma by providing a vehicle of the sort mentioned in the opening paragraph with a folding roof which is both user friendly and operationally sound and also can be folded up extremely compactly.

The object of the invention is solved by the charaterized part of claim 1. The vehicle with a folding roof is characterized according to the invention in that the pulling arm has a variable length, and in that the pulling arm has a first length when the roof is closed, and in that the pulling arm has a second length when the roof is fully opened, and in that the first length is larger than the second length.

When the roof is closed, the pulling arm is extended to the first length and is as a result sufficiently long to be able to lift the roof further and pull it backwards when the roof part is just slightly lifted. When the roof is folded, the pulling arm then pulls itself in to such a small second length that the pulling arm is no longer a bar to a fully and compactly closed roof. Accordingly the final thickness of the folded roof is considerably smaller than in the case of a similar construction with a stiff pulling arm with a fixed length. As a result of this the invention provides a solution especially for smaller vehicles whereby, due to the lack of sufficient storage space, it is often inevitable that a roof which is not folded completely has a very negative aesthetic effect. However, with the present invention the natural line of the vehicle can be followed as far as possible and even emphasized, when the roof is both open and closed, which leads to a very attractive aesthetic result.

The variable length of the pulling arm may be achieved in several ways. For example, parts of the pulling arm may be designed in a manner in which they hinge on one another, whereby the parts are folded together when opening the roof and are pulled apart when closing the roof. A more compact and more sturdy construction, however, is obtained in a special embodiment whereby the pulling arm contains at least two parts which can be moved axially in respect of each other, and more particularly, are slidable. The parts of the pulling arm can thereby be placed both co-axially and parallel to one another. In a closed position of the roof the pulling arm is slid out, while the pulling arm slides in when opening the roof to a sufficiently small length in order to be able to fold up the roof completely.

In order to reduce the dead swing of the pulling arm when opening and closing the roof to a minimum, the pulling arm is preferably always implemented in such a manner that, in a closed position of the roof, the pulling arm has its maximum length and that, when the roof is in a fully opened position, the driving rod has its minimum length.

From an aesthetic point of view the pulling arm must not only be horizontal, but must also be located as little as possible above the frame. In order to achieve this, a preferred embodiment of the vehicle according to the invention is characterized to that end in that the roof part and the intermediate part are connected to one another in a hinging manner, in that the pulling arm is connected with a first of two hinging parts, which first hinging part is attached in a hinging manner at a free end to the intermediate part, in that the second hinging part is attached in a hinging manner to the roof part, and in that the four said parts enclose a parallelogram. In that case the pulling arm is connected to the roof part via both hinging parts. The place of the catching point of the pulling arm on the first hinging part is thereby equally important for the soundness and the ease of use of the roof as the place of the pulling arm in the known vehicle.

The invention is particularly advantageous in a vehicle of the kind mentioned in the opening paragraph whereby the roof cannot only be operated manually but also automatically. A special embodiment of the vehicle according to the invention is therefore characterized by the fact that the basic part of the frame is equipped with power assisting means in order to operate the roof automatically. In a further embodiment the power assisting means comprise a hydraulic cylinder which is pivotably connected to the vehicle, whereby a driving rod of the cylinder is attached in a hinging manner to a lifting support of the basic part of the frame.

The invention shall now be explained further with the aid of an example of an embodiment and a drawing. The drawing shows by:
- figure 1: a cross-section of an embodiment of the vehicle according to the invention;
- figure 2: a perspective view of the roof construction of the vehicle of figure 1;
- figure 3: a cross-section of the roof construction of figure 2; and
- figure 4A-4E: consecutive stages of the folding and opening of the roof construction of figure 3.

The figures are purely schematic and not always drawn to scale. Particularly for the sake of clarity some dimensions have been shown in a considerably exaggerated manner. In the figures corresponding parts are indicated as far as possible with the same reference number.

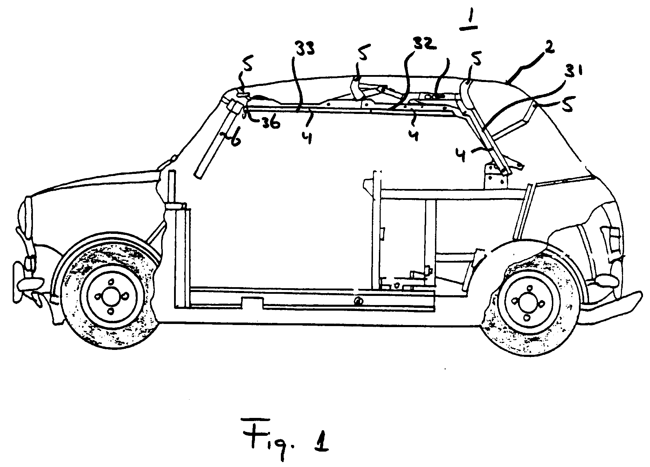

In figure 1 the invention is applied in a relatively small car with a total length, width and height of respectively 305, 144 and 135 cm. The car is equipped with a folding roof 1 containing a flexible cloth 2 of fabric, leather or a suitable plastic which is supported by a metal frame 3. Instead of metal the frame can, by the way, also be made of a suitable plastic, of wood or of another suitable material.

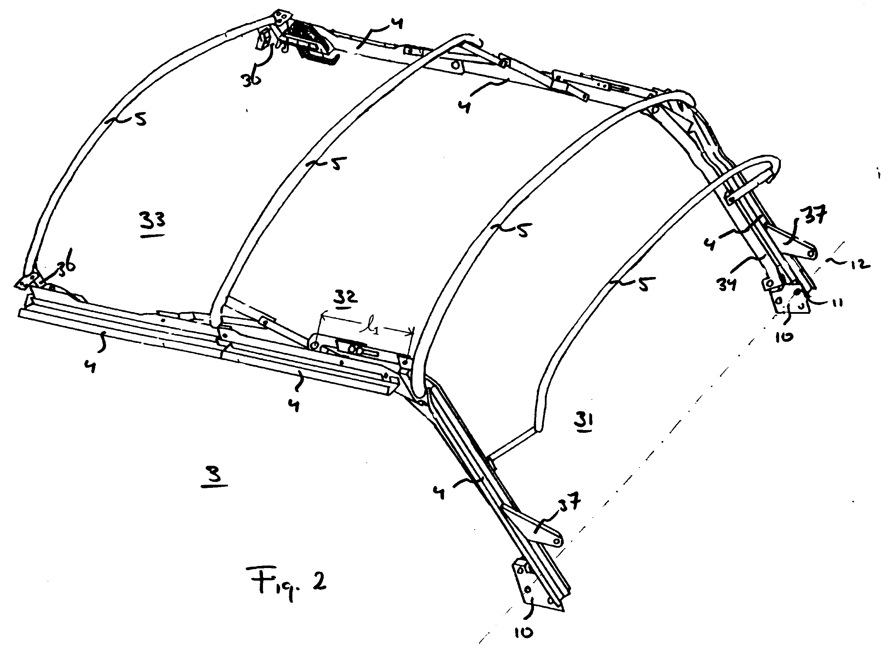

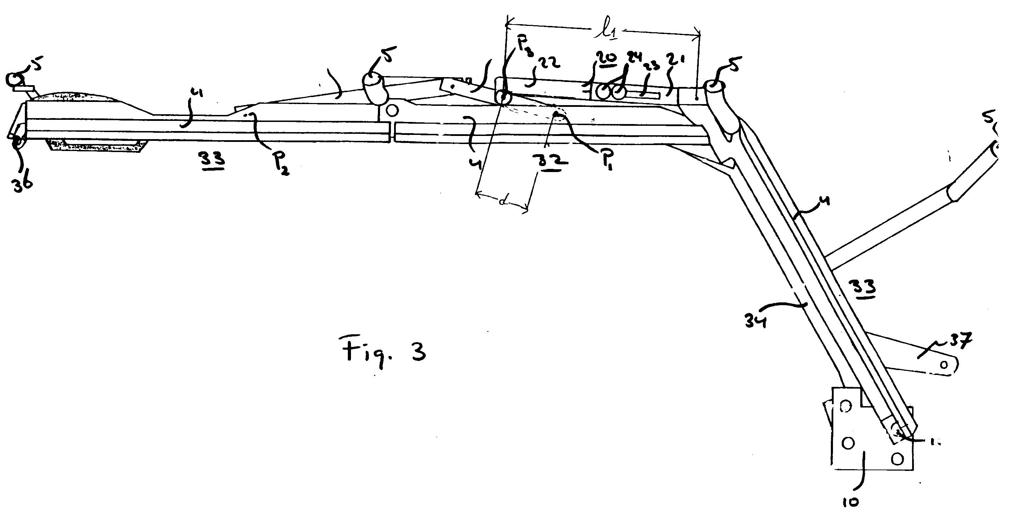

The frame 3 is shown in more detail in figure 2 and 3 respectively in perspective and in a lateral cross-section, and comprises three hinging parts 31, 32, 33 which hinge on one another. The parts 31, 32, 33 of the frame each comprise two slats 4 situated opposite one another which are mutually connected by a cross bar 5. Besides an increased stiffness the cross bars offer a basis on which the cloth can be attached.

A basic part 31 of the frame comprises, at its free end, two plates 10 for attachment to the vehicle. The plates 10 are each equipped with a bore 11 in which the basic part 31 is attached hinging around an axis 12 which is placed transverse to the longitudinal direction of the vehicle. The frame 3 also comprises a turning arm 34 on both sides which holds the roof in a horizontal position sufficiently long when it is opened. The frame is equipped at the front side with closing means 36 with which the roof can be attached to the window post 6 of the windscreen of the vehicle.

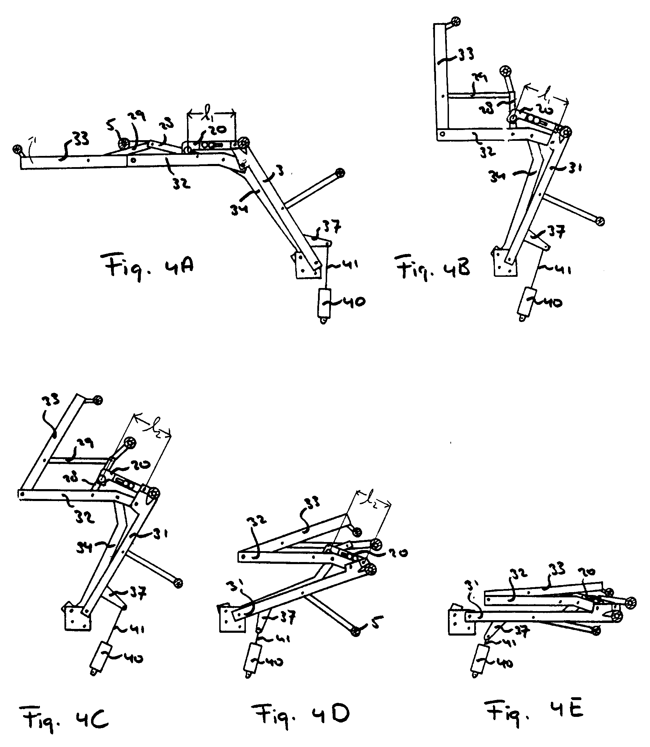

In order to be able to automatically fold up and fold open the roof, the basic part 31 of the frame 3 is equipped with power assisting means 40 in the form of a hydraulic cylinder. The cylinder 40 is pivotably attached to the vehicle at its bottom end and comprises a driving rod 41 which is attached in a hinging manner to the lifting support 37 of the basic part 31. If the cylinder 40 is powered in the position in which it is shown, the driving rod is withdrawn, as a result of which the basic part 31 of the frame 3 is turned around the axis 12 backwards, i.e. clockwise in the drawing, taking with it the other parts 32, 33 of the frame 3. In figure 4A-4E this is shown in consecutive stages. The even parts of the frame, in this case the intermediate part 32, thereby fold downwards under the influence of gravity, while the uneven parts, in this case the front roof part 33, are pulled up and backwards, see figure 4C-4E.

In order to achieve the above the basic part 31 is attached to the front roof part 33 by means of a pulling arm 20 and two hinging parts 28, 29. The pulling arm conprises two parts 21, 22 which slide alongside each other, of which a first part 21 comprises a longitudinal groove 23 in which a double cam 24 of the second part 22 is received in a manner in which it can freely slide. In this manner the pulling arm 20 has a variable length in accordance with the invention. In the closed position of the roof shown, the pulling arm thereby has its maximum length ***l***_{*1*} as a result of which the catching point P₃ is located relatively far from the hinging point P₁

As a result of the intervention of the hinging parts 28, 29 the entire construction can be considerably flatter than if the pulling arm were to catch directly on the front roof part 33, which is, incidentally, not excluded within the framework of the invention. The hinging parts 28, 29 are dimensioned in such manner and the catching points P₁,P₂ thereof on both roof parts 32, 33 are chosen in such a manner, that the roof parts 32, 33 and the hinging parts 28, 29 enclose a parallelogram, which is clearly shown in figure 4B and 4C.

Before the roof can be folded up, the closing means must first be unlocked and the roof must be lifted a slight distance in order to bring the frame past the dead swing of the pulling arm construction 20, 28, 29. This can be done by hand or, for example as in the present case, under the influence of the spring force of springs, not drawn, which are attached to the frame.

The distance which must thereby be bridged is in the present case relatively small, due to the extended pulling arm 20 and the resulting considerable distance **d** between the catching point P₁ of the pulling arm 20 on the first hinging part 28 and the hinging point P₁ between the first hinging part 28 and the intermediate part 32. As a result of that considerable distance **d** and the associated moment of the pulling arm in respect of the hinging point P₁, also the force which must be exercised by the basic part 31 via the pulling arm 20 and the hinging parts 28, 29 on the font roof part 33 in order to fold it up can be relatively small. The invention thus contributes to an important degree to both the user-friendliness and the soundness of the construction.

As soon as the weight of the front roof part 33 has a positive component in the extension of the pulling arm, see figure 4C, the pulling arm is pressed in under the influence thereof to its smaller length ***l***_{*2*}. The double cam 24 of the second part 22 of the pulling arm 20 is then located in the other extreme position in the groove 23 of the first part 21. As a result of this shortening of the pulling arm 20 the invention makes it possible to fold up the roof entirely into an extremely compact package, which is shown in figure 4D and 4E.

In order to close the roof, the cylinder 40 is powered in such a manner that the driving rod is driven out as a result of which the basic part 31 will be turned forwards around the axis 12 and the stages of figure 4A-4E will be followed in a reversed sequence. The pulling arm 20 is thereby extended as soon as the weight of the front roof part 33 has a negative component in the extension of the pulling arm 20, which will be the case past the position of figure 4B.

Because the driving rod 20 has its maximum and minimum lengths in the closed and the open position of the roof, respectively, any dead movement when opening and closing the roof in the present example is limited to a minimum. The invention thus provides an extremely user-friendly and reliable roof construction which can be folded in a particularly compact manner.

While the invention has been explained in further detail morely on the basis of a particular embodiment, it will be clear that the invention is by no means limited to the example which has been given. On the contrary many more variations and embodiments are possible within the framework of the invention. For example, the invention can be applied not only for a car, but also on other vehicles and vessels, whether they are motorized or not, with folding roofs whether or not manually driven.

Also, the variable length of the pulling arm can be achieved in other manners, such as, for example, by means of parts which hinge in respect of one another or parts which can move coaxially in respect of one another.

Besides this, the roof construction can comprise a larger number of hinging parts, whereby each uneven part can be equipped with a pulling arm of variable length in accordance with the invention.

In general, the invention teaches a person skilled in the art the possibility of combining a reliable and user-friendly operation of a folding roof construction with a maximum folding capability, which is of particular importance for the more compact cars which are becoming increasingly popular.

## Claims

1. Vehicle with a folding roof (1) comprising a flexible cloth (2) which is supported by a frame (3) consisting of a number of hinging parts (31, 32, 33), whereby a basic part (31) of the frame (3) is pivotably connected to the vehicle and a roof part (33) of the frame (3) is separated from the basic part (31) by at least one intermediate part (32) and is connected by at least a pulling arm (20) to the basic part, **characterized in that** the pulling arm (20) has a variable length, and in that the pulling arm (20) has a first length (l₁) in closed position of the roof, and that the pulling arm (20) has a second length (l₂) in a fully folded position of the roof, and in that the first length is larger than the second length.

2. Vehicle according to claim 1, characterized in that the pulling arm (20) comprises at least two axially movable parts.

3. Vehicle according to claim 2, **characterized in that** the pulling arm (20) comprises two coaxially slidable parts.

4. Vehicle according to claim 2, **characterized in that** the pulling arm (20) comprises two parts which are slidable alongside one another.

5. Vehicle according to claim 4, **characterized in that** the first part of the pulling arm (20) comprises a longitudinal groove (23) in which a cam (24) of a second part of the pulling arm is received in a slidable manner.

6. Vehicle according to one or more of the preceding claims, characterized in that, in a closed position of the roof (1), the pulling arm (20) has its maximum length, and in that in a fully opened position of the roof, the pulling arm (20) has its minimum length.

7. Vehicle according to one or more of the preceding claims, **characterized in that** the roof part (33) and the intermediate part (32) are connected to one another in a hinging manner, in that the pulling arm (20) is connected with a first of two hinging parts (28, 29), which first hinging part (28) is attached in a hinging manner to the intermediate part (32), in that the second hinging part (29) is attached in a hinging manner to the roof part (33), and in that the four said parts enclose a parallelogram.

8. Vehicle according to one or more of the preceding claims, **characterized in that** the basic part (31) of the frame (3) is equipped with power assisting means (40) in order to operate the roof automatically.

9. Vehicle according to claim 8, **characterized in that** the power assisting means (40) comprise a hydraulic cylinder which is pivotably connected to the vehicle and in that a driving rod (41) of the cylinder is attached to a lifting support of the basic part (31) of the frame (3) in a hinging manner.

## Patentansprüche

1. Kraftfahrzeug mit einem Faltverdeck (1), das einen flexiblen Stoff (2) umfaßt, der von einem Rahmen (3) getragen wird, bestehend aus einer Anzahl scharniergelagerter Teile (31, 32, 33), wobei ein Grundteil (31) des Rahmens (3) schwenkbar mit dem Fahrzeug verbunden ist, und ein Dachteil (33) des Rahmens (3) von dem Grundteil (31) durch mindestens ein Zwischenteil (32) getrennt ist und mit mindestens einem Zugarm (20) mit dem Grundteil verbunden ist, dadurch gekennzeichnet, daß der Zugarm (20) eine veränderliche Länge hat, und daß der Zugarm eine erste Länge (l₁) in der geschlossenen Stellung des Daches hat, und daß der Zugarm (20) eine zweite Länge (l₂) in voll zusammengefalteter Stellung des Daches hat, und daß die erste Länge größer als die zweite Länge ist.

2. Kraftfahrzeug nach Anspruch 1, dadurch gekennzeichnet, daß der Zugarm (20) aus mindestens zwei axial beweglichen Teilen besteht.

3. Kraftfahrzeug nach Anspruch 2, dadurch gekennzeichnet, daß der Zugarm (20) aus zwei koaxial verschiebbaren Teilen besteht.

4. Kraftfahrzeug nach Anspruch 2, dadurch gekennzeichnet, daß der Zugarm (20) aus zwei Teilen besteht, die nebeneinander verschiebbar sind.

5. Kraftfahrzeug nach Anspruch 4, dadurch gekennzeichnet, daß der erste Teil des Zugarms (20) eine Längsrille (23) umfaßt, in der ein Nocken (24) eines zweiten Teils des Zugarms verschiebbar aufgenommen wird.

6. Kraftfahrzeug nach einem oder mehreren der vorhergehenden Ansprüche, dadurch gekennzeichnet, daß in geschlossener Stellung des Daches (1), der Zugarm (20) seine größte Länge besitzt, und daß in voll geöffneter Stellung des Daches der Zugarm (20) seine kleinste Länge besitzt.

7. Kraftfahrzeug nach einem oder mehreren der vorhergehenden Ansprüche, dadurch gekennzeichnet, daß das Dachteil (33) und das Zwischenteil (32) scharnierartig miteinander verbunden sind, daß der Zugarm (20) mit einem ersten von zwei Scharnierteilen (28, 29) verbunden ist, welches erste Scharnierteil (28) scharnierartig an dem Zwischenteil (32) angebracht ist, daß das zweite Scharnierteil (29) scharnierartig an dem Dachteil (33) angebracht ist, und daß die vier genannten Teile ein Parallelogramm einschließen.

8. Kraftfahrzeug nach einem oder mehreren der vorhergehenden Ansprüche, dadurch gekennzeichnet, daß das Grundteil (31) des Rahmens (3) mit Antriebsmitteln (40) zur automatischen Bedienung des Daches ausgerüstet ist.

9. Kraftfahrzeug nach Anspruch 8, dadurch gekennzeichnet, daß die Antriebsmittel (40) einen Hydraulikzylinder einschließen, der schwenkbar mit dem Fahrzeug verbunden ist, und daß eine Antriebsstange (41) des Zylinders an einer Hebestütze des Grundteils (31) des Rahmens (3) scharnierartig angebracht ist.

## Revendications

1. Véhicule comportant un toit repliable (1) comprenant une toile souple (2) qui est supportée par un cadre (3) constitué d'un certain nombre d'éléments articulés (31, 32 33), en sachant qu'un élément de base (31) du cadre (3) est relié par pivotement au véhicule et qu'un élément de toit (33) du cadre (3) est séparé de l'élément de base (31) par au moins un élément intermédiaire (32) et est relié par au moins un bras de traction (20) à l'élément de base, caractérisé en ce que le bras de traction (20) présente une longueur variable, et en ce que le bras de traction (20) présente une première longueur (21) en position fermée du toit, et en ce que le bras de traction (20) présente une deuxième longueur (22) dans une position entièrement repliée du toit, et en ce que la première longueur est supérieure à la deuxième longueur.

2. Véhicule suivant la revendication 1, caractérisé en ce que le bras de traction (20) comprend au moins deux éléments mobiles dans le sens axial.

3. Véhicule suivant la revendication 2, caractérisé en ce que le bras de traction (20) comprend deux éléments coulissables dans le sens coaxial.

4. Véhicule suivant la revendication 2, caractérisé en ce que le bras de traction (20) comprend deux éléments qui sont coulissables parallèlement l'un à l'autre.

5. Véhicule suivant la revendication 4, caractérisé en ce que le premier élément du bras de traction (20) comprend une gorge longitudinale (23) dans laquelle une came (24) d'un deuxième élément du bras de traction est reçue de manière coulissable.

6. Véhicule suivant une ou plusieurs des revendications précédentes, caractérisé en ce que, dans une position fermée du toit (1), le bras de traction (20) présente sa longueur maximale, et en ce que, dans une position entièrement ouverte du toit, le bras de traction (20) présente sa longueur minimale.

7. Véhicule suivant une ou plusieurs des revendications précédentes, caractérisé en ce que l'élément de toit (33) et l'élément intermédiaire (32) sont reliés l'un à l'autre de manière articulée, en ce que le bras de traction (20) est relié à un premier de deux éléments articulés (28, 29), lequel premier élément articulé (28) est fixé de manière articulée à l'élément intermédiaire (32), en ce que le deuxième élément articulé (29) est fixé de manière articulée à l'élément de toit (33), et en ce que lesdits quatre éléments enferment un parallélogramme.

8. Véhicule suivant une ou plusieurs des revendications précédentes, caractérisé en ce que l'élément de base (31) du cadre (3) est équipé de moyens d'assistance (40) afin d'actionner automatiquement le toit.

9. Véhicule suivant la revendication 8, caractérisé en ce que les moyens d'assistance (40) comprennent un cylindre hydraulique qui est relié par pivotement au véhicule et en ce qu'une bielle directrice (41) du cylindre est fixée à un support de levage de l'élément de base (31) du cadre (3) de manière articulée.
